(19) Europäisches Patentamt
European Patent Office
Office européen des brevets

(11) **EP 3 157 661 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **15730468.4**

(22) Anmeldetag: **16.06.2015**

(51) Internationale Patentklassifikation (IPC):
**B01J 4/00** (2006.01)  **B01J 8/02** (2006.01)

(52) Gemeinsame Patentklassifikation (CPC):
**B01J 4/001; C08F 2/01; C08F 120/14;**
B01J 2208/00893; B01J 2219/00247

(86) Internationale Anmeldenummer:
**PCT/EP2015/063430**

(87) Internationale Veröffentlichungsnummer:
**WO 2015/197425 (30.12.2015 Gazette 2015/52)**

(54) **VORRICHTUNG ZUR ZUGABE VON TROPFEN AUS EINER MONOMERLÖSUNG IN EINEN REAKTOR**

DEVICE FOR DISPENSING DROPS OF A MONOMER SOLUTION INTO A REACTOR

DISPOSITIF POUR L'ADDITION DE GOUTTES D'UNE SOLUTION MONOMÉRIQUE DANS UN RÉACTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2014 EP 14173491**

(43) Veröffentlichungstag der Anmeldung:
**26.04.2017 Patentblatt 2017/17**

(73) Patentinhaber: **BASF SE**
**67056 Ludwigshafen am Rhein (DE)**

(72) Erfinder:
• **DAISS, Andreas**
**67061 Ludwigshafen (DE)**
• **BAYER, Robert**
**74889 Sinsheim (DE)**
• **SCHLIWA, Rudolf**
**63755 Alzenau (DE)**
• **FREIBERG, Jürgen**
**68623 Lampertheim (DE)**
• **POSSEMIERS, Karl J.**
**67346 Speyer (BE)**
• **KRÜGER, Marco**
**68219 Mannheim (DE)**

(74) Vertreter: **BASF IP Association**
**BASF SE**
**GBI-C006**
**67056 Ludwigshafen (DE)**

(56) Entgegenhaltungen:
EP-A1- 1 500 418    WO-A1-2008/105669
US-A- 4 839 108    US-A- 5 014 740

**Beschreibung**

Die Erfindung geht aus von einer Vorrichtung zur Zugabe von Tropfen aus einer Monomerlösung zur Herstellung von Poly(meth)acrylat in einen Reaktor zur Tropfenpolymerisation, wobei mindestens ein Kanal oder ein Vertropferkopf umfasst ist, der an seiner Unterseite Löcher aufweist, durch die die Lösung in den Reaktor eingebracht wird.

Poly(meth)acrylate finden Anwendung insbesondere als wasserabsorbierende Polymere, die beispielsweise bei der Herstellung von Windeln, Tampons, Damenbinden und anderen Hygieneartikeln oder auch als wasserzurückhaltende Mittel im landwirtschaftlichen Gartenbau verwendet werden.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck die Zentrifugenretentionskapazität abnimmt, wobei bei sehr hohen Vernetzungsgraden auch die Absorption unter Druck wieder abnimmt.

Zur Verbesserung der Anwendungseigenschaften, beispielsweise der Flüssigkeitsleitfähigkeit in der Windel und der Absorption unter Druck, werden wasserabsorbierende Polymerpartikel im Allgemeinen nachvernetzt. Dadurch steigt nur der Vernetzungsgrad an der Partikeloberfläche, wodurch die Absorption unter Druck und die Zentrifugenretentionskapazität zumindest teilweise entkoppelt werden können. Diese Nachvernetzung kann in wässriger Gelphase durchgeführt werden. Im Allgemeinen werden aber gemahlene und abgesiebte Polymerpartikel an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Zur Herstellung der wasserabsorbierenden Polymerpartikel sind unterschiedliche Verfahren bekannt. So können zum Beispiel die zur Herstellung von Poly(meth)acrylaten eingesetzten Monomere und gegebenenfalls Additive einem Mischkneter zugegeben werden, in dem die Monomere zum Polymer reagieren. Durch rotierende Wellen mit Knetbarren im Mischkneter wird das entstehende Polymer in Brocken zerrissen. Das dem Kneter entnommene Polymer wird getrocknet und gemahlen und einer Nachbearbeitung zugeführt. In einer alternativen Variante wird das Monomer in Form einer Monomerlösung, die auch weitere Additive enthalten kann, in einen Reaktor zur Tropfenpolymerisation eingebracht. Beim Einbringen der Monomerlösung in den Reaktor zerfällt diese in Tropfen. Bei dem Mechanismus der Tropfenbildung kann es sich um turbulenten oder laminaren Strahlzerfall oder aber auch um Vertropfung handeln. Der Mechanismus der Tropfenbildung hängt dabei von den Eintrittsbedingungen und den Stoffeigenschaften der Monomerlösung ab. Die Tropfen fallen im Reaktor nach unten, wobei das Monomer zum Polymer reagiert. Im unteren Bereich des Reaktors befindet sich eine Wirbelschicht, in die die durch die Reaktion aus den Tropfen entstehenden Polymerpartikel fallen. In der Wirbelschicht findet dann eine Nachreaktion statt. Entsprechende Verfahren sind zum Beispiel in der WO-A 2006/079631, der WO-A 2008/086976, der WO-A 2007/031441, der WO-A 2008/040715, der WO-A 2010/003855 und der WO-A 2011/026876 beschrieben.

Nachteil bei allen Verfahren, die nach dem Prinzip der Tropfenpolymerisation durchgeführt werden, bei denen Monomerlösung in Tropfen zerfällt und in einem Reaktor unter Bildung des Polymeren nach unten fällt, ist, dass Tropfen beim Zusammenprall koaleszieren können und auch an die Wandung des Reaktors prallende Tropfen anhaften können und so zu einer ungewünschten Belagsbildung führen können. Weiterhin nachteilig ist, dass sich die Tropfen nicht gleichmäßig mit dem Gas im Reaktor vermischen. Dadurch ergeben sich ungleiche Tropfentemperaturen und in der Folge ungleiche Trocknungs- und Polymerisationsbedingungen für die Tropfen, was sich negativ auf die Eigenschaften des Endproduktes auswirkt.

Aufgabe der vorliegenden Erfindung ist es, eine Vorrichtung zur Zugabe von Tropfen aus einer Monomerlösung zur Herstellung von Poly(meth)acrylat in einem Reaktor zur Tropfenpolymerisation bereitzustellen, mit der eine gleichmäßige Verteilung der Tropfen über den Reaktorquerschnitt möglich wird und die ferner gewährleistet, dass die Tropfen nicht koaleszieren und möglichst wenig Wandbeläge durch vorzeitigen Kontakt der Tropfen mit der Reaktorwand entstehen.

Diese Aufgabe wird gelöst mit einer Vorrichtung zur Zugabe von Tropfen aus einer Monomerlösung zur Herstellung von Poly(meth)acrylat in einen Reaktor zur Tropfenpolymerisation, wobei mindestens ein Kanal oder ein Vertropferkopf umfasst ist, der an seiner Unterseite Löcher aufweist, durch die die Lösung in den Reaktor eingebracht wird, und einer Wirbelschicht in einem unteren Bereich des Reaktors, wobei mindestens eines der folgenden Merkmale umfasst ist:

(a) das Verhältnis der von den Kanälen oder dem Vertropferkopf abgedeckten Fläche im Reaktor bezogen auf die Fläche, die durch den Umfang einer Linie entlang der äußersten Löcher definiert wird, ist kleiner als 50%,

(b) die Kanäle sind sternförmig im Reaktor angeordnet und die Anzahl der Löcher bezogen auf die Fläche, die durch den Umfang einer Linie entlang der äußersten Löcher definiert wird, liegt im Bereich von 100 bis 1000 Löcher/m$^2$,

wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden und wobei der Abstand der äußersten Löcher zur Wandung des Reaktors im Bereich von 100 bis 1500 mm liegt und die Kanäle mit einem Winkel im Bereich von 0° bis 20° zur Horizontalen ausgerichtet sind, wobei die Kanäle auf der zur Wandung des Reaktors weisenden Seite niedriger als auf der zum Mittelpunkt des Reaktors weisenden Seite sind.

Durch die Gestaltung derart, dass das Verhältnis der von den Kanälen oder dem Vertropferkopf abgedeckten Fläche im Reaktor bezogen auf die Fläche, die durch den Umfang einer Linie entlang der äußersten Löcher definiert wird, kleiner als 50% ist, kann ausreichend Gas, das oberhalb der Vorrichtung zur Zugabe von Tropfen in den Reaktor zugeführt wird, an der Vorrichtung vorbei in den Reaktor strömen, so dass eine gleichmäßige Gasgeschwindigkeit im Reaktor erzielt werden kann und insbesondere keine zu große Beschleunigung und Verwirbelung des Gases beim Umströmen der Vorrichtung erfolgt, was zu einer unerwünschten Ablenkung der Tropfen und in der Folge zu Kollision und Koaleszenz im Bereich der Vorrichtung zur Vertropfung führen könnte. Bevorzugt ist es, wenn das Verhältnis der von den Kanälen oder dem Vertropferkopf abgedeckten Fläche in dem Reaktor bezogen auf die Fläche, die von der die äußersten Löcher verbindenden Linie umschlossen wird, im Bereich zwischen 3 und 30 % liegt.

Durch die Ausführung derart, dass die Anzahl der Löcher bezogen auf die Fläche, die durch die die äußersten Löcher verbindende Linie gebildet wird, im Bereich von 100 bis 1000 Löcher/m$^2$ liegt, wird sichergestellt, dass die an den Löchern gebildeten Tropfen einen ausreichend großen Abstand zueinander haben und zudem ausreichend mit dem durch den Reaktor strömenden Gas in Kontakt kommen können. Bevorzugt liegt die Anzahl der Löcher bezogen auf die Fläche, die durch die die äußersten Löcher verbindende Linie gebildet wird, im Bereich von 150 bis 800 Löcher/m$^2$ und insbesondere im Bereich von 200 bis 500 Löcher/m$^2$

Für eine einfache Revision der Vorrichtung zur Vertropfung der Monomerlösung, ist es bevorzugt, wenn der mindestens eine Kanal an seiner Unterseite mit mindestens einer demontierbaren Vertropferplatte verschlossen ist, in der die Löcher zur Zugabe der Monomerlösung ausgebildet sind. Dies ermöglicht es einerseits, in Abhängigkeit von der Monomerlösung oder der gewünschten Tropfengröße auf einfache Weise die Größe der Löcher durch Tausch der Vertropferplatten zu variieren, auf der anderen Seite ist es auch möglich, die Vertropferplatten einfach auszutauschen, um zum Beispiel benutzte Vertropferplatten zu reinigen, wenn diese verschmutzt sind.

Üblicherweise tritt die Monomerlösung in Form eines Flüssigkeitsstrahls aus den Löchern der Vorrichtung zur Vertropfung aus, der dann im Reaktor in Tropfen zerfällt. Der Zerfall des Flüssigkeitsstrahls hängt zum einen von der Menge der Flüssigkeit ab, die durch die Löcher pro Zeiteinheit austritt, zum anderen von der Geschwindigkeit und Menge des durch den Reaktor strömenden Gases. Weiterhin beeinflussen die Stoffeigenschaften der Monomerlösung und die Geometrie der Löcher die Art des Strahlzerfalles. Im Rahmen der vorliegenden Erfindung wird der Tropfenzerfall auch als Eintropfen oder Vertropfen bezeichnet.

In einer Ausführungsform sind die Kanäle, an deren Unterseite die Löcher ausgebildet sind, sternförmig im Reaktorkopf angeordnet. Durch die sternförmige Anordnung der Kanäle ist es insbesondere in einem Reaktor mit kreisförmigem Querschnitt möglich, eine gleichmäßige Verteilung der Tropfen im Reaktor zu erhalten. Die Zugabe erfolgt durch die Kanäle, in die die Monomerlösung eingeleitet wird. Durch die Löcher an der Unterseite der Kanäle tritt die Flüssigkeit aus und bildet die Tropfen.

Damit die aus den Kanälen austretenden Tropfen schnellstmöglich mit dem die Kanäle umströmenden Gas in Kontakt kommen, ist es weiterhin bevorzugt, wenn die Kanäle eine möglichst geringe Breite aufweisen. Die Breite der Kanäle liegt dabei vorzugsweise im Bereich von 25 bis 500 mm, weiter bevorzugt im Bereich von 100 bis 400 mm und insbesondere im Bereich von 150 bis 350 mm.

Die Anzahl $N_{RL}$ der einzelnen Kanäle bei einer sternförmigen Anordnung ist abhängig vom Umfang U des Reaktors an der Position, an der die Kanäle angeordnet sind. Bevorzugt liegt die Anzahl der Kanäle im nachfolgend definierten Bereich:

$$\frac{U}{4.0m} \leq N_{RL} \leq \frac{U}{1.2m}$$

und insbesondere

$$\frac{U}{3.6m} \leq N_{RL} \leq \frac{U}{1.8m}.$$

Hierbei ist der Umfang U in Metern einzusetzen und "m" bedeutet Meter.
Neben einer Gestaltung derart, dass die Kanäle der Vorrichtung zur Vertropfung sternförmig angeordnet sind, können diese auch in jeder beliebigen Anordnung zueinander angeordnet sein, beispielsweise parallel zueinander oder sich überschneidend, dass beispielsweise eine Rechteckteilung oder eine Dreiecksteilung durch die Anordnung der Kanäle realisiert wird. Bei einer Dreiecksteilung und einer Rechteckteilung sind jeweils mehrere parallel ausgerichtet Kanäle quer zueinander ausgerichtet, wobei bei einer Rechteckteilung der Winkel zwischen den quer zueinander ausgerichteten Kanäle 90° ist und bei einer Dreiecksteilung vorzugsweise 60°.

Alternativ zur sternförmigen Anordnung, bei der sich alle Kanäle im Mittelpunkt des Reaktors treffen, ist es alternativ auch möglich, die Kanäle drehsymmetrisch um den Mittelpunkt des Reaktors anzuordnen, wobei die Kanäle jeweils von der Außenwandung unterschiedlich weit in Richtung des Mittelpunkts des Reaktors in den Reaktor ragen. Dies ist insbesondere bei großen Reaktordurchmessern vorteilhaft, da durch diese Anordnung außen mehr Kanäle sind als in der Mitte des Reaktors und hierdurch die Monomerlösung gleichmäßiger über den gesamten Reaktorquerschnitt zugeführt werden kann.

In einer weiteren Ausführungsform umfasst die Vorrichtung zur Zugabe von Tropfen mindestens einen ringförmigen Kanal. Der ringförmige Kanal ist dabei vorzugsweise so ausgebildet, dass dieser parallel zur Innenwandung des Reaktors verläuft und der Abstand zwischen Innenwandung und Kanal über den gesamten Umfang gleich groß ist. Für eine gleichmäßige Verteilung der Tropfen ist es weiterhin bevorzugt, wenn der Durchmesser des äußersten ringförmigen Kanals 10 bis 35% kleiner ist als der maximale Innendurchmesser des Reaktors.

Wenn statt mindestens eines Kanals zur Zugabe der Monomerlösung ein Vertropferkopf eingesetzt wird, so weist dieser vorzugsweise einen kreisförmigen oder einen gleichmäßigen polygonalen Querschnitt auf. Durch den kreisförmigen oder gleichmäßigen polygonalen Querschnitt wird ebenfalls erreicht, dass die Tropfen gleichmäßig im Reaktor verteilt werden. Ein Vertropferkopf kann zum Beispiel dann eingesetzt werden, wenn der Reaktor ebenfalls einen kreisförmigen Querschnitt aufweist. Bei einem nicht kreisförmigen Querschnitt des Reaktors lässt sich bei Verwendung von Vertropferköpfen eine gleichmäßige Tropfenverteilung zum Beispiel durch Verwendung mehrerer Vertropferköpfe erreichen.

Neben dem Einsatz von mindestens einem Kanal oder einem Vertropferkopf zur Zugabe der Monomerlösung ist es auch möglich, mindestens einen Kanal und einen Vertropferkopf einzusetzen. So ist es zum Beispiel möglich, einen Vertropferkopf und einen den Vertropferkopf umschließenden ringförmigen Kanal zu verwenden. Auch ist es möglich, zusätzlich zum Vertropferkopf radial ausgerichtete und von außen nach innen ragende Kanäle vorzusehen.

Um Tropfen einer geeigneten Größe für wasserabsorbierende Polymere zu erhalten, ist es bevorzugt, wenn die Löcher, durch die die Monomerlösung zugegeben wird, einen Durchmesser im Bereich von 25 bis 500 $\mu$m, mehr bevorzugt im Bereich von 50 bis 350 $\mu$m und insbesondere im Bereich von 100 bis 250 $\mu$m aufweisen. Die Löcher in der Vertropferplatte können konisch, zylindrisch oder mit einem konischen und einem zylindrischen Abschnitt gefertigt werden. Bei Fertigung mit einem konischen und einem zylindrischen Abschnitt befindet sich der konische Abschnitt auf der zum Kanal weisenden Seite, wobei der Durchmesser von einem oberen Durchmesser zum zylindrischen Abschnitt hin abnimmt. Der anschließende zylindrische Abschnitt weist dann den vorstehend definierten Durchmesser auf.

Um eine ausreichend große Anzahl an Tropfen zu erzeugen, ist es bevorzugt, wenn die Löcher der Vertropferplatten in mehreren Lochreihen angeordnet sind. Hierbei ist es insbesondere bevorzugt, wenn der Abstand der einzelnen Löcher in einer Lochreihe und der Abstand benachbarter Lochreihen im Wesentlichen gleich groß sind. Ein geeigneter Abstand der Löcher in einer Lochreihe und der Lochreihen zueinander liegt im Bereich von 1 bis 100 mm, bevorzugt im Bereich von 2 bis 50 mm und insbesondere im Bereich von 3 bis 20 mm.

Um eine ausreichend große Menge an Monomerlösung in den Reaktor einbringen zu können, ist es weiterhin vorteilhaft, wenn die auf die Fläche der Vertropfer bezogene Anzahl der Löcher im Bereich von 1000 bis 15000 Löcher/m$^2$, bevorzugt im Bereich von 2000 bis 12000 Löcher/m$^2$ und insbesondere im Bereich von 4000 bis 10000 Löcher/m$^2$ liegt.

Weiterhin ist es bevorzugt, wenn zumindest die Löcher am Rand des Kanals so ausgebildet sind, dass die Monomerlösung in einem Winkel zur Achse des Reaktors aus den Löchern austritt. Durch den Austritt der Monomerlösung in einem Winkel zur Achse des Reaktors kann eine gleichmäßigere Verteilung der Tropfen im Reaktor und ein größerer Abstand der Tropfen aus einem Kanal zueinander erhalten werden. Bei einer sternförmigen Anordnung der Kanäle ist es weiterhin bevorzugt, wenn der Winkel, mit dem die Monomerlösung zur Achse des Reaktors aus den Löchern austritt, von innen nach außen hin zunimmt. Dass die Flüssigkeit in einem Winkel zur Achse des Reaktors austritt, kann entweder durch entsprechende Gestaltung der Löcher, zum Beispiel indem diese in einem Winkel in der Vertropferplatte ausgebildet sind, oder alternativ durch winklige Gestaltung der Vertropferplatte realisiert werden.

Wenn der Winkel, mit dem die Tropfen aus den Löchern austreten über die gesamte Länge der einzelnen Kanäle der Vorrichtung zur Vertropfung konstant ist, so liegt dieser vorzugsweise im Bereich von 0 bis 30°, bevorzugt im Bereich von 0,1 bis 20° und insbesondere im Bereich von 0,2 bis 15°.

Insbesondere bei einer sternförmigen Anordnung der Kanäle ist es bevorzugt, wenn der Winkel, mit dem die Tropfen aus den Löchern austreten mit der Position des Lochs variiert, da der Abstand zwischen zwei Kanälen von der Mitte nach außen hin zunimmt. So ist es vorteilhaft, wenn der Winkel näher zum Mittelpunkt kleiner ist als der Winkel an den äußeren Löchern.

Bevorzugt ist es bei einer sternförmigen Anordnung, wenn der Winkel $\alpha$, mit dem die Flüssigkeit zumindest aus den Löchern an den radialen Rändern austritt, im nachfolgend definierten Bereich liegt:

$$\frac{r}{N_{LR} \cdot d_P \cdot v^{0.578}} \cdot \left(0.00697 \cdot r + 0.0332\right) - 6.296 \leq \alpha \leq \frac{r}{N_{LR} \cdot d_P \cdot v^{0.578}} \cdot \left(0.00697 \cdot r + 0.0332\right) + 4.704,$$

bevorzugt

$$\frac{r}{N_{LR} \cdot d_P \cdot v^{0.578}} \cdot \left(0.00697 \cdot r + 0.0332\right) - 4.296 \leq \alpha \leq \frac{r}{N_{LR} \cdot d_P \cdot v^{0.578}} \cdot \left(0.00697 \cdot r + 0.0332\right) + 2.704$$

und besonders bevorzugt

$$\frac{r}{N_{LR} \cdot d_P \cdot v^{0.578}} \cdot \left(0.00697 \cdot r + 0.0332\right) - 2.296 \leq \alpha \leq \frac{r}{N_{LR} \cdot d_P \cdot v^{0.578}} \cdot \left(0.00697 \cdot r + 0.0332\right) + 1.704,$$

für den Gültigkeitsbereich

$$0.25m \leq r \leq 10m$$

$$0.0001m \leq d_P \leq 0.0015m$$

$$3\tfrac{m}{s} \leq v \leq 30\tfrac{m}{s}$$

$$3 \leq N_{LR} \leq 18.$$

Hierbei bedeuten r die radiale Position des Lochs in Metern, $N_{LR}$ die Anzahl der Kanäle, $d_p$ der mittlere Tropfendurchmesser in Metern und v die Tropfenaustrittsgeschwindigkeit in Meter pro Sekunde. Der Winkel $\alpha$ der Löcher ergibt sich in Grad. Wenn sich ein Wert kleiner als Null ergibt, so ist anstelle des berechneten Wertes der Wert 0° für den Winkel zu verwenden.

Eine weitere Optimierung des Austrittswinkels der Tropfen bezogen auf die Achse des Reaktors kann durch numerische Simulationsrechnungen erfolgen. Neben einer stetigen Änderung des Austrittswinkels ist es alternativ auch möglich, den Austrittswinkel der Tropfen stufenweise zu ändern. Hierzu wird dann vorzugsweise jeweils der Winkel in der Mitte einer Stufe nach obiger Definition festgelegt.

Dass die Flüssigkeit in einem Winkel zur Achse des Reaktors aus den Löchern der Vertropferplatten austritt, lässt sich zum Beispiel dadurch realisieren, dass die Vertropferplatten an ihrer Unterseite entlang ihrer Längsachse gewinkelt sind. Bei einer sternförmigen Anordnung der Kanäle und damit der Vertropferplatten führt dies dazu, dass die Flüssigkeit in einem Winkel zu einer durch die Achse des Reaktors verlaufenden Ebene aus den Löchern austritt. Die Löcher, durch die die Monomerlösung in den Reaktor zugegeben wird, sind vorzugsweise in Reihen parallel zur Längsachse der Vertropferplatte angeordnet. Der Winkel, mit dem die Vertropferplatten zur Horizontalen ausgerichtet sind, entspricht dabei dem Austrittswinkel der Tropfen aus den Löchern zur senkrechten Achse des Reaktors. Insbesondere bei Einsatz von mehreren Vertropferplatten und einer sternförmigen Anordnung der Kanäle ist es vorteilhaft, wenn bei einer Variation des Austrittswinkels jede Vertropferplatte in einem Kanal einen anderen Winkel aufweist, der von innen nach außen zunimmt und nach obenstehender Definition jeweils in der Mitte der Vertropferplatte bestimmt wird.

Neben einer gewinkelten Gestaltung der Vertropferplatten ist auch eine beliebige andere Gestaltung möglich, bei der die Löcher der Vertropferplatten entlang der Längsachse in der Mitte tiefer liegen als an den Rändern. Dies ist zum Beispiel möglich, wenn die Vertropferplatte in Form eines Kreissegments entlang der Längsachse gebildet wird. Auch ist es zum Beispiel möglich, die Vertropferplatte so zu gestalten, dass diese in der Mitte entlang der Längsachse einen Bereich aufweist, der flach verläuft und die Seitenbereiche links und rechts vom flach verlaufenden Bereich zur Längsachse gewinkelt sind oder in Form eines Bogens gestaltet sind.

Ausführungsbeispiele der Erfindung sind in den Figuren dargestellt und werden in der nachfolgenden Beschreibung näher erläutert.

Es zeigen:

Figur 1    einen Längsschnitt durch einen Reaktor zur Tropfenpolymerisation

Figur 2    eine Anordnung von radial verlaufenden Vertropferkanälen unterschiedlicher Länge,

Figur 3    eine Anordnung von sternförmig angeordneten Vertropferkanälen,

Figur 4    eine Anordnung von Vertropferkanälen in Rechteckteilung,

Figur 5    eine Anordnung von Vertropferkanälen in Dreiecksteilung,

Figur 6    einen Querschnitt durch einen Vertropferkanal in einer ersten Ausführungsform,

Figur 7    einen Querschnitt durch einen Vertropferkanal in einer zweiten Ausführungsform,

Figur 8    einen Querschnitt durch einen Vertropferkanal in einer dritten Ausführungsform,

Figur 9    eine Draufsicht auf eine Vertropferplatte.

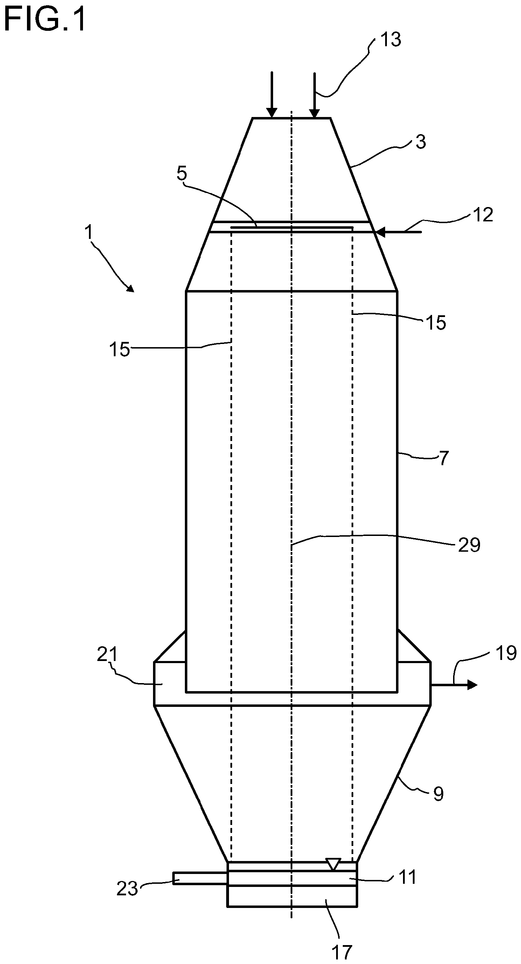

Figur 1 zeigt einen Längsschnitt durch einen Reaktor zur Tropfenpolymerisation, wie er zur Herstellung von Poly(meth)acrylatpartikeln vorzugsweise eingesetzt wird.

Ein Reaktor 1 zur Tropfenpolymerisation umfasst einen Reaktorkopf 3, in dem eine Vorrichtung zur Vertropfung 5 aufgenommen ist, einen mittleren Bereich 7, in dem die Polymerisationsreaktion erfolgt und einen unteren Bereich 9 mit einer Wirbelschicht 11, in der die Reaktion abgeschlossen wird.

Zur Durchführung der Polymerisationsreaktion zur Herstellung des Poly(meth)acrylats wird der Vorrichtung zur Vertropfung 5 eine Monomerlösung über eine Monomerzufuhr 12 zugeführt. Wenn die Vorrichtung zur Vertropfung 5 mehrere Kanäle aufweist, ist es bevorzugt, jedem Kanal über eine eigene Monomerzufuhr 12 die Monomerlösung zuzuführen. Die Monomerlösung tritt durch in Figur 1 nicht dargestellte Löcher in der Vorrichtung zur Vertropfung 5 aus und zerfällt in einzelne Tropfen, die im Reaktor nach unten fallen. Über eine erste Zugabestelle für ein Gas 13 oberhalb der Vorrichtung zur Vertropfung 5 wird ein Gas, beispielsweise Stickstoff oder Luft, in den Reaktor 1 eingeleitet. Die Gasströmung unterstützt dabei den Zerfall der aus den Löchern der Vorrichtung zur Vertropfung 5 austretenden Monomerlösung in einzelne Tropfen. Zusätzlich wird durch die Gasströmung unterstützt, dass sich die einzelnen Tropfen nicht berühren und zu größeren Tropfen koaleszieren.

Um zum Einen den zylindrischen mittleren Bereich 7 des Reaktors möglichst kurz zu gestalten und zudem zu vermeiden, dass Tropfen an die Wandung des Reaktors 1 prallen, ist der Reaktorkopf 3 vorzugsweise, wie hier dargestellt, konisch ausgebildet, wobei sich die Vorrichtung zur Vertropfung 5 im konischen Reaktorkopf 3 oberhalb des zylindrischen Bereichs befindet. Alternativ ist es allerdings auch möglich, den Reaktor auch im Reaktorkopf 3 zylindrisch mit einem Durchmesser wie im mittleren Bereich 7 zu gestalten. Bevorzugt ist jedoch eine konische Gestaltung des Reaktorkopfs 3. Die Position der Vorrichtung zur Vertropfung 5 wird so gewählt, dass zwischen den äußersten Löcher, durch die die Monomerlösung zugeführt wird und der Wandung des Reaktors noch ein ausreichend großer Abstand ist, um ein Anprallen der Tropfen an die Wandung zu verhindern. Hierzu sollte der Abstand mindestens im Bereich von 100 bis 1500 mm, bevorzugt im Bereich von 100 bis 1250 mm und insbesondere im Bereich von 200 bis 750 mm liegen. Selbstverständlich ist auch ein größerer Abstand zur Wandung des Reaktors möglich. Dies hat jedoch den Nachteil, dass mit einem größeren Abstand eine schlechtere Ausnutzung des Reaktorquerschnittes einhergeht.

Der untere Bereich 9 schließt mit einer Wirbelschicht 11 ab, in die die während des Falls aus den Monomertropfen entstandenen Polymerpartikel fallen. In der Wirbelschicht erfolgt die Nachreaktion zum gewünschten Produkt. Erfindungsgemäß sind die äußersten Löcher, durch die die Monomerlösung vertropft wird, so positioniert, dass ein senkrecht nach unten fallender Tropfen in die Wirbelschicht 11 fällt. Dies kann zum Beispiel dadurch realisiert werden, dass der hydraulische Durchmesser der Wirbelschicht mindestens so groß ist wie der hydraulische Durchmesser der Fläche, die von einer die äußersten Löcher in der Vorrichtung zur Vertropfung 5 verbindenden Linie umschlossen wird, wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden. Die äußerste Position der äußeren Löcher bezogen auf die Position der Wirbelschicht 11 ist in Figur 1 mit Hilfe einer gestrichelten Linie 15 dargestellt.

Um weiterhin zu vermeiden, dass Tropfen auch im mittleren Bereich 7 an die Wandung des Reaktor prallen, ist der hydraulische Durchmesser auf Höhe der Mitte zwischen der Vorrichtung zur Vertropfung und der Gasentnahmestelle mindestens 10% größer als der hydraulische Durchmesser der Wirbelschicht.

Der Reaktor 1 kann dabei jede beliebige Querschnittsform aufweisen. Bevorzugt ist der Querschnitt des Reaktors 1 jedoch kreisförmig. In diesem Fall entspricht der hydraulische Durchmesser dem Durchmesser des Reaktors 1.

Oberhalb der Wirbelschicht 11 nimmt der Durchmesser des Reaktors 1 in der hier dargestellten Ausführungsform zu, so dass sich der Reaktor 1 im unteren Bereich 9 von unten nach oben konisch erweitert. Dies hat den Vorteil, dass im Reaktor 1 entstandene Polymerpartikel, die auf die Wandung treffen, an der Wandung nach unten in die Wirbelschicht 11 rutschen können. Zur Vermeidung von Anbackungen können zusätzlich hier nicht dargestellte Klopfer außen am konusförmigen Teil des Reaktors vorgesehen sein, mit denen die Wandung des Reaktors in Schwingungen versetzt wird, wodurch sich anhaftende Polymerpartikel lösen und in die Wirbelschicht 11 rutschen.

Zur Gaszufuhr für den Betrieb der Wirbelschicht 11, befindet sich unterhalb der Wirbelschicht 11 ein Gasverteiler 17, durch den das Gas in die Wirbelschicht 11 eingeblasen wird.

Da sowohl von oben als auch von unten Gas in den Reaktor 1 eingeleitet wird, ist es erforderlich, an einer geeigneten Position Gas aus dem Reaktor 1 zu entnehmen. Hierzu ist am Übergang vom mittleren Bereich 7 mit konstantem Querschnitt zum sich konisch von unten nach oben erweiternden unteren Bereich 9 mindestens eine Gasentnahmestelle 19 angeordnet. Hierbei ragt der zylindrische mittlere Bereich 7 mit seiner Wandung in den sich nach oben konisch erweiternden unteren Bereich 9 hinein, wobei der Durchmesser des konischen unteren Bereichs 9 an dieser Position größer ist als der Durchmesser des mittleren Bereichs 7. Hierdurch wird eine die Wandung des mittleren Bereichs 7 umlaufende ringförmige Kammer 21 gebildet, in die das Gas einströmt, und aus der das Gas durch die mindestens eine Gasentnahmestelle 19, die mit der ringförmigen Kammer 21 verbunden ist, abgezogen werden kann.

Die nachreagierten Polymerpartikel der Wirbelschicht 11 werden über eine Produktentnahmestelle 23 aus dem Bereich der Wirbelschicht entnommen.

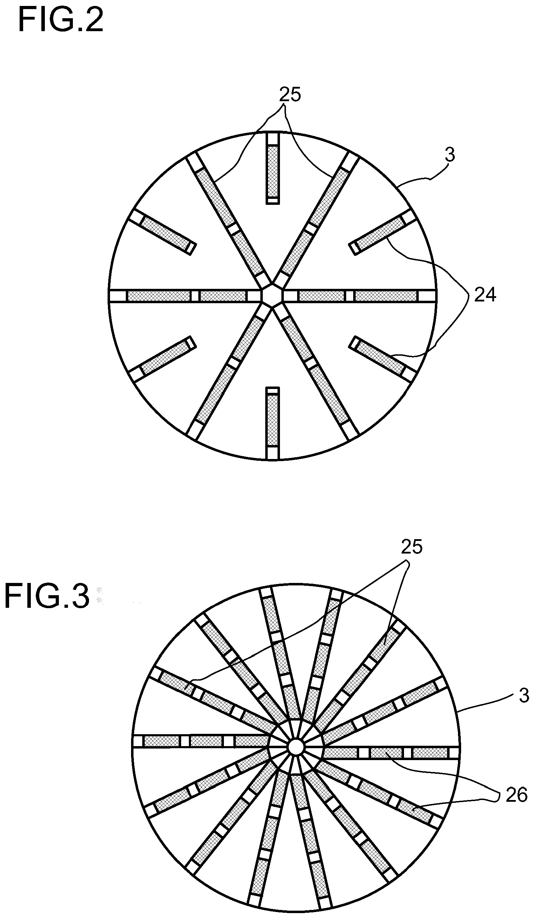

In Figur 2 ist eine Anordnung von radial verlaufenden Vertropferkanälen unterschiedlicher Länge dargestellt.

In einer ersten Ausführungsform weist die Vorrichtung zur Vertropfung radial verlaufende Kanäle 25 auf. Hierbei ragt ein Teil der Kanäle 25 bis in die Mitte des Reaktors 1. Ein weiterer Teil an Kanälen 24 ragt weniger weit in den Reaktor 1, so dass insbesondere in den äußeren Bereichen des Reaktors, wo der Abstand zwischen den radial verlaufenden bis in die Mitte des Reaktors 1 ragenden Kanälen 25 groß ist, weitere Kanäle 24 vorgesehen sind, durch die Monomerlösung in den Reaktor 1 eingebracht werden kann. Dies erlaubt eine gleichmäßigere Verteilung der Tropfen über den gesamten Reaktorquerschnitt.

Um zu unterstützen, dass die die Vorrichtung zur Vertropfung verlassenden Tropfen nicht an die Wandung des Reaktors 1 prallen, sind die Kanäle in einem Winkel $\beta$ zur Horizontalen im Reaktorkopf 3 ausgerichtet. Der Winkel $\beta$ liegt dabei im Bereich von 0° bis 20°, bevorzugt im Bereich von 0 bis 15° und insbesondere im Bereich von 0 bis 5°. Hierbei sind die Kanäle auf der zur Wandung des Reaktors 3 weisenden Seite niedriger als auf der zum Mittelpunkt des Reaktors 3 weisenden Seite.

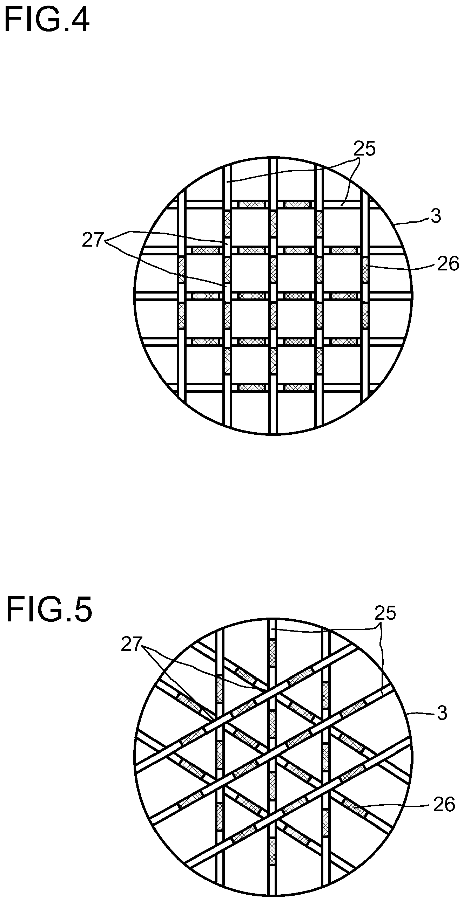

Eine entsprechende sternförmige Anordnung der Kanäle 25 ist in Figur 3 dargestellt. Weitere mögliche Anordnungen der Kanäle zeigen die Figuren 4 und 5. Bei diesen ist allerdings eine Anordnung mit einem Winkel $\beta$ zur Horizontalen nur schwierig zu realisieren, so dass in diesem Fall die Kanäle 25 vorzugsweise horizontal verlaufen. Figur 4 zeigt eine Anordnung in Rechteckteilung, bei der die einzelnen Kanäle 25 jeweils in einem Winkel von 90° zueinander angeordnet sind, so dass durch die Schnittpunkte 27 der Kanäle jeweils Rechtecke, vorzugsweise Quadrate gebildet werden.

Figur 5 zeigt eine Anordnung in Dreiecksteilung. Hier sind die Kanäle 25 jeweils mit einem Winkel von 60° zueinander angeordnet, so dass durch die Schnittpunkte 27 der Kanäle 25 jeweils gleichseitige Dreiecke gebildet werden. Dies setzt allerdings zudem voraus, dass die jeweils parallel verlaufenden Kanäle einen immer gleich großen Abstand aufweisen.

Um ein Herausziehen der Kanäle in den in den Figuren 4 und 5 gezeigten Ausführungsformen zu ermöglichen, ist es erforderlich, dass die Kanäle 25, die nicht parallel zueinander ausgerichtet sind, in unterschiedlichen horizontalen Ebenen liegen.

Alternativ zu den hier dargestellten Ausführungsformen ist es selbstverständlich auch möglich, die Kanäle so anzuordnen, dass der Abstand zwischen parallel angeordneten Kanälen variiert oder der Abstand zwischen den parallel angeordneten Kanälen jeweils gleich groß ist, aber die Abstände zwischen den parallel angeordneten Kanälen, die in unterschiedlicher Richtung verlaufen, unterschiedlich sind. Zudem ist es auch möglich, die Kanäle in einem beliebigen anderen Winkel zueinander anzuordnen.

Insbesondere bei einem kreisförmigen Reaktorquerschnitt ist jedoch die in Figur 3 dargestellte sternförmige Anordnung bevorzugt. Hierbei kann jedoch die Anzahl der Kanäle in Abhängigkeit vom Umfang des Reaktors variieren. Zudem ist es möglich, die Kanäle unterschiedlich lang zu gestalten, so dass diese unterschiedlich weit in den Reaktor 1 hineinragen. Dabei ist jedoch immer eine drehsymmetrische Anordnung bevorzugt.

Die Position von Vertropferplatten 26, mit denen die Kanäle zur Zufuhr der Monomerlösung auf ihrer Unterseite abgeschlossen sind, und in denen die Löcher ausgebildet sind, durch die die Monomerlösung in den Reaktor vertropft wird, ist in den Figuren 3 bis 5 durch die gepunkteten Flächen dargestellt.

Erfindungsgemäß wird die Anzahl der Kanäle 24, 25 so gewählt, dass das Verhältnis der von den Kanälen 24, 25 oder dem Vertropferkopf abgedeckten Fläche im Reaktor bezogen auf die Fläche, die durch den Umfang einer Linie entlang der äußersten Löcher definiert wird, kleiner ist als 50%. Hierdurch wird sichergestellt, dass ausreichend Gas an den Kanälen 24, 25 vorbei strömen kann und ein hinreichender Kontakt zwischen Gas und die Kanäle 24, 25 verlassenden Tropfen realisiert wird.

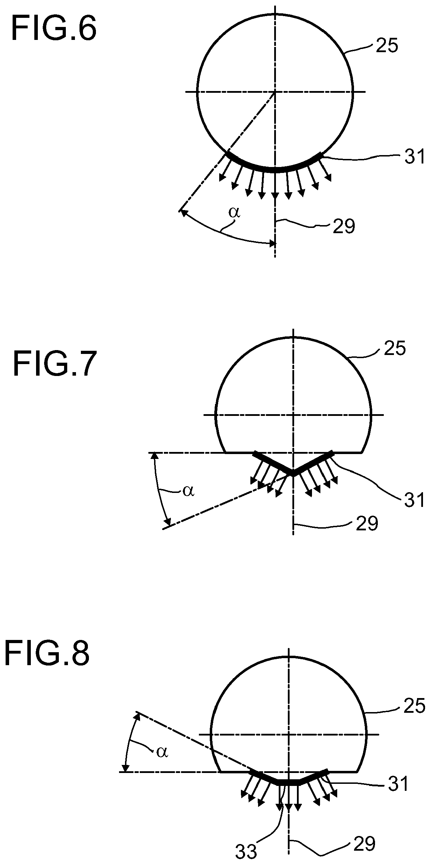

In den Figuren 6, 7 und 8 sind Querschnitte durch Kanäle 25 in unterschiedlichen Ausführungsformen dargestellt.

Um eine gleichmäßige Tropfenverteilung über den Reaktorquerschnitt zu erhalten, ist es bevorzugt, wenn zumindest die Tropfen, die an den äußeren Löcher in einem Kanal gebildet werden, in einem Winkel zur Senkrechten, das heißt zur Reaktorachse, austreten. Hierzu ist es zum Beispiel möglich, den Bereich des Kanals, in dem die Löcher ausgebildet sind, wie in Figur 6 dargestellt, in Form eines Kreissegments zu gestalten. Hierdurch nimmt der Winkel α, unter dem die Monomerlösung in Bezug auf die Reaktorachse 29 austritt, von der Kanalmitte nach außen hin zu.

Alternativ ist es auch möglich, wie in Figur 7 dargestellt, den Kanalboden, in dem die Löcher ausgebildet sind, in einem Winkel zur Horizontalen auszurichten, wobei bei Löchern senkrecht zum Kanalboden 31 der Winkel α, mit dem die Tropfen austreten zur Reaktorachse dem Winkel α des Kanalbodens zur Horizontalen entspricht. Auch ist eine Gestaltung möglich, bei der zusätzlich zu den gewinkelten Bereichen des Kanalbodens 31 ein mittlerer Bodenbereich 33 horizontal verläuft.

Um eine einfache Reinigung der Löcher zu ermöglichen, ist es vorteilhaft, wenn die Löcher in Vertropferplatten ausgebildet sind, die an entsprechend gestalteten Öffnungen im Boden der Kanäle 25 positioniert werden. Die Vertropferplatten können dann zur Reinigung ausgebaut werden und durch saubere Vertropferplatten ersetzt werden. Die Vertropferplatten sind dabei vorzugsweise entweder in Form eines Kreissegments oder gewinkelt gestaltet, damit ein Bodenverlauf des Kanals 25 realisiert werden kann, wie er in den Figuren 6 bis 8 dargestellt ist.

Insbesondere bei einer sternförmigen Anordnung der Kanäle ist es weiterhin bevorzugt, wenn der Winkel, mit dem die Monomerlösung austritt, von der Reaktormitte nach außen hin zunimmt.

Neben dem hier dargestellten kreisförmigen Querschnitt ist es auch möglich, die Kanäle 25 mit einem beliebigen anderen Querschnitt zu gestalten. Insbesondere dann, wenn Vertropferplatten eingesetzt werden, ist es besonders bevorzugt, die Kanäle 25 mit einem rechteckigen Querschnitt auszubilden. In diesem Fall kann der Kanal oben mit einem abnehmbaren Deckel verschlossen werden und die Vertropferplatten können nach Abnehmen des Deckels auf einfache Weise entnommen und ausgetauscht werden.

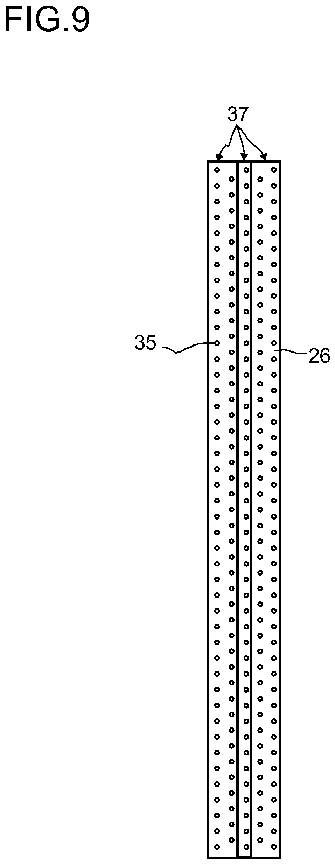

Figur 9 zeigt eine Draufsicht auf eine Vertropferplatte.

Eine Vertropferplatte 26 weist eine Anzahl an Löchern 35 auf, durch die die Monomerlösung in den Reaktor eingetropft wird. Dabei fließt die Monomerlösung durch die Löcher 35 und zerfällt nach Verlassen der Vertropferplatte 26 in Tropfen. Die Tropfenerzeugung erfolgt dabei unmittelbar nach dem Verlassen der Vertropferplatte 26.

Erfindungsgemäß wird die Anzahl der Löcher in der Vertropferplatte bezogen auf die Fläche der Vertropferplatte 26 so gewählt, dass die Anzahl der Löcher bezogen auf die Fläche, die durch den Umfang einer Linie entlang der äußersten Löcher 35 der Vertropferplatte 26 definiert wird, im Bereich von 1000 bis 15000 Löcher/m$^2$, bevorzugt im Bereich von 2000 bis 12000 Löcher/m$^2$ und insbesondere im Bereich von 4000 bis 10000 Löcher/m$^2$ liegt. Hierbei werden alle Vertropferplatten der Vorrichtung zur Vertropfung 5 im Reaktor 1 berücksichtigt. Durch die entsprechende Anzahl an Löchern 35 wird eine ausreichend große Menge an Tropfen erzeugt, um den Reaktor wirtschaftlich betreiben zu können, auf der anderen Seite darf die Anzahl an Tropfen nicht so groß werden, dass einzelne Tropfen zusammenstoßen und koaleszieren. Die Tropfenanzahl muss daher so gewählt werden, dass jeder Tropfen von einem ausreichend großen Gasvolumen umschlossen wird, mit dem ein Zusammenstoß mit anderen Tropfen weitgehend vermieden werden kann. Eine vollständige Vermeidung von Tropfenzusammenstößen und Koaleszenz einzelner Tropfen lässt sich nicht erreichen, wenn der Reaktor noch wirtschaftlich betrieben werden soll. Eine weitgehende Vermeidung wird jedoch erzielt, wenn die Anzahl an Löchern 35 in der Vertropferplatte bezogen auf die Fläche, die durch den Umfang einer Linie entlang der äußersten Löcher 35 der Vertropferplatte 26 definiert wird, im vorstehend beschriebenen Bereich liegt.

Aus herstellungstechnischer Sicht ist es bevorzugt, wenn die Löcher 35 zur Monomerzugabe in parallel nebeneinander liegenden Lochreihen 37, wie hier dargestellt, angeordnet sind. Um einen Zusammenprall der Tropfen weitgehend zu vermeiden, liegt ein geeigneter Abstand der Löcher in einer Lochreihe und der Lochreihen zueinander im Bereich von 1 bis 100 mm, bevorzugt im Bereich von 2 bis 50 mm und insbesondere im Bereich von 3 bis 20 mm.

Bezugszeichenliste

1 Reaktor
3 Reaktorkopf
5 Vorrichtung zur Vertropfung
7 mittlerer Bereich
9 unterer Bereich

11    Wirbelschicht
12    Monomerzufuhr
13    Zugabestelle für Gas
15    Position der äußersten Löcher in Bezug zur Wirbelschicht 11
17    Gasverteiler
19    Gasentnahmestelle
21    ringförmige Kammer
23    Produktentnahmestelle
24    Kanal
25    Kanal
26    Vertropferplatte
27    Schnittpunkt
29    Reaktorachse
31    Kanalboden
33    mittlerer Bodenbereich
35    Loch zur Monomerzugabe
37    Lochreihe

**Patentansprüche**

1.   Reaktor zur Tropfenpolymerisation mit einer Vorrichtung zur Zugabe von Tropfen aus einer Monomerlösung zur Herstellung von Poly(meth)acrylat, wobei die Vorrichtung zur Zugabe von Tropfen mindestens einen Kanal (24, 25) oder einen Vertropferkopf umfasst, der an seiner Unterseite Löcher (35) aufweist, durch die die Lösung in den Reaktor (1) eingetropft wird, und einer Wirbelschicht (11) in einem unteren Bereich (9) des Reaktors (1), wobei mindestens eines der folgenden Merkmale (a) und (b) umfasst ist:

(a) das Verhältnis der von den Kanälen (24, 25) oder dem Vertropferkopf abgedeckten Fläche im Reaktor (1) bezogen auf die Fläche, die durch die die äußersten Löcher verbindende Linie gebildet wird, ist kleiner als 50%,
(b) die Kanäle (25) sind sternförmig im Reaktor angeordnet und die Anzahl der Löcher (35) bezogen auf die Fläche, die durch die die äußersten Löcher verbindenden Linie gebildet wird, liegt in einem Bereich von 100 bis 1000 Löchern/m$^2$,

wobei die Querschnittsfläche der Wirbelschicht (11) und die von der die äußersten Löcher verbindenden Linie gebildete Fläche die gleiche Form haben und sich die Mittelpunkte der beiden Flächen in einer senkrechten Projektion aufeinander an derselben Position befinden und wobei der Abstand der äußersten Löcher zur Wandung des Reaktors im Bereich von 100 bis 1500 mm liegt und die Kanäle (25) mit einem Winkel im Bereich von 0° bis 20° zur Horizontalen ausgerichtet sind, wobei die Kanäle (25) auf der zur Wandung des Reaktors (3) weisenden Seite niedriger als auf der zum Mittelpunkt des Reaktors (3) weisenden Seite sind.

2.   Reaktor gemäß Anspruch 1, **dadurch gekennzeichnet, dass** die Kanäle (24, 25) an ihrer Unterseite mit Vertropferplatten (26) verschlossen sind, in denen die Löcher (35) zum Eintropfen der Lösung aufgenommen sind.

3.   Reaktor gemäß einem der Ansprüche 1 oder 2, **dadurch gekennzeichnet, dass** die Kanäle (24, 25) drehsymmetrisch um den Mittelpunkt des Reaktors (1) angeordnet sind, wobei die Kanäle jeweils von der Außenwandung unterschiedlich weit in Richtung des Mittelpunkts des Reaktors (1) in den Reaktor (1) ragen.

4.   Reaktor gemäß Anspruch 1 oder 2, **dadurch gekennzeichnet, dass** jeweils mehrere parallel ausgerichtete Kanäle (25) quer zueinander ausgerichtet sind.

5.   Reaktor gemäß Anspruch 1 oder 2, **dadurch gekennzeichnet, dass** mindestens ein ringförmiger Kanal umfasst ist.

6.   Reaktor gemäß Anspruch 1, **dadurch gekennzeichnet, dass** der Vertropferkopf einen kreisförmigen oder einen gleichmäßigen polygonalen Querschnitt aufweist.

7.   Reaktor gemäß einem der Ansprüche 1 bis 6, **dadurch gekennzeichnet, dass** die Löcher (35) einen Durchmesser im Bereich von 25 bis 500 μm aufweisen.

8. Reaktor gemäß einem der Ansprüche 1 bis 7, **dadurch gekennzeichnet, dass** die Löcher (35) einen Abstand voneinander im Bereich von 1 bis 100 mm aufweisen.

9. Reaktor gemäß einem der Ansprüche 1 bis 8, **dadurch gekennzeichnet, dass** die auf die Fläche der Vertropfer bezogene Anzahl der Löcher im Bereich von 1000 bis 15000 Löcher/m$^2$ ist.

**Claims**

1. A reactor for droplet polymerization having an apparatus for addition of droplets of a monomer solution for production of poly(meth)acrylate, wherein the apparatus for addition of droplets comprises at least one channel (24, 25) or a dropletizer head having, at its base, holes (35) through which the solution is dropletized into the reactor (1), and a fluidized bed (11) in a lower region (9) of the reactor (1), at least one of the following features (a) and (b) being fulfilled:

    (a) the ratio of the area covered by the channels (24, 25) or the dropletizer head in the reactor (1) relative to the area formed by the line connecting the outermost holes is less than 50%,
    (b) the channels (25) are arranged in a star shape in the reactor and the number of holes (35) relative to the area formed by the line connecting the outermost holes is within a range from 100 to 1000 holes/m$^2$,

    wherein the cross-sectional area of the fluidized bed (11) and the area formed by the line connecting the outermost holes have the same shape and the centers of the two areas are at the same position in a vertical projection of one onto the other and wherein the distance of the outermost holes from the wall of the reactor is in the range from 100 to 1500 mm and the channels (25) are aligned at an angle in the range from 0° to 20° to the horizontal, wherein the channels (25) on the side facing the wall of the reactor (3) are lower than on the side facing the center of the reactor (3).

2. The reactor according to claim 1, wherein the channels (24, 25) are sealed at their base by dropletizer plates (26) in which the holes (35) for dropletization of the solution are accommodated.

3. The reactor according to claim 1 or 2, wherein the channels (24, 25) are arranged in a rotationally symmetric manner about the center of the reactor (1), the channels each projecting into the reactor (1) to different extents from the outer wall in the direction of the center of the reactor (1).

4. The reactor according to claim 1 or 2, wherein a plurality of parallel channels (25) in each case are aligned transverse to one another.

5. The reactor according to claim 1 or 2, wherein at least one annular channel is included.

6. The reactor according to claim 1, wherein the dropletizer head has a circular or homogeneous polygonal cross section.

7. The reactor according to any of claims 1 to 6, wherein the holes (35) have a diameter in the range from 25 to 500 $\mu$m.

8. The reactor according to any of claims 1 to 7, wherein the holes (35) have a distance from one another in the range from 1 to 100 mm.

9. The reactor according to any of claims 1 to 8, wherein the number of holes relative to the area of the dropletizers is in the range from 1000 to 15 000 holes/m$^2$.

**Revendications**

1. Réacteur de polymérisation goutte à goutte comprenant un dispositif pour l'addition de gouttes d'une solution de monomère pour la production de poly(méth)acrylate, le dispositif pour l'addition de gouttes comprenant au moins un canal (24, 25) ou une tête de goutte-à-goutte qui présente sur sa face inférieure des trous (35) à travers lesquels la solution est introduite en goutte-à-goutte dans le réacteur (1), et un lit fluidisé (11) dans une zone inférieure (9) du réacteur (1), au moins une des caractéristiques (a) et (b) suivantes étant présente :

    (a) le rapport de la surface couverte par les canaux (24, 25) ou la tête de goutte-à-goutte dans le réacteur (1) par rapport à la surface formée par la ligne reliant les trous les plus à l'extérieur est inférieur à 50%,

(b) les canaux (25) sont disposés en étoile dans le réacteur et le nombre de trous (35) par rapport à la surface formée par la ligne reliant les trous les plus à l'extérieur est dans une gamme allant de 100 à 1000 trous/m$^2$,

la surface de la section transversale du lit fluidisé (11) et la surface formée par la ligne reliant les trous les plus à l'extérieur ont la même forme et les centres des deux surfaces se trouvent dans une projection perpendiculaire l'un sur l'autre à la même position et dans lequel la distance des trous les plus à l'extérieur à la paroi du réacteur est dans une gamme allant de 100 à 1500 mm et les canaux (25) sont orientés avec un angle dans une gamme allant de 0° à 20° par rapport à l'horizontale, les canaux (25) étant plus bas sur le côté orienté vers la paroi du réacteur (3) que sur le côté orienté vers le centre du réacteur (3).

2. Réacteur selon la revendication 1, **caractérisé en ce que** les canaux (24, 25) sont fermés sur leur face inférieure par des plaques de goutte-à-goutte (26) dans lesquelles sont logés les trous (35) pour l'écoulement goutte-à-goutte de la solution.

3. Réacteur selon l'une des revendications 1 ou 2, **caractérisé en ce que** les canaux (24, 25) sont disposés avec une symétrie de révolution autour du centre du réacteur (1), les canaux faisant chacun saillie dans le réacteur (1) à partir de la paroi extérieure sur une distance différente en direction du centre du réacteur (1).

4. Réacteur selon la revendication 1 ou la revendication 2, **caractérisé en ce que** plusieurs canaux (25) orientés parallèlement sont respectivement orientés transversalement les uns par rapport aux autres.

5. Réacteur selon la revendication 1 ou 2, **caractérisé en ce qu'**il comprend au moins un canal annulaire.

6. Réacteur selon la revendication 1, **caractérisé en ce que** la tête de goutte-à-goutte présente une section circulaire ou une section polygonale régulière.

7. Réacteur selon l'une des revendications 1 à 6, **caractérisé en ce que** les trous (35) ont un diamètre compris entre 25 et 500 μm.

8. Réacteur selon l'une des revendications 1 à 7, **caractérisé en ce que** les trous (35) présentent un espacement entre eux compris entre 1 et 100 mm.

9. Réacteur selon l'une des revendications 1 à 8, **caractérisé en ce que** le nombre de trous par rapport à la surface du formeur de gouttes est compris entre 1000 et 15000 trous/m$^2$.

# FIG.1

## FIG.2

## FIG.3

FIG.4

FIG.5

FIG.6

FIG.7

FIG.8

# FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079631 A
- WO 2008086976 A
- WO 2007031441 A
- WO 2008040715 A
- WO 2010003855 A
- WO 2011026876 A